# EUROPEAN PATENT APPLICATION

(11) **EP 1 176 556 A2**
(43) Date of publication of application: **30.01.2002**
(21) Application number: 01117579.1
(22) Date of filing: 20.07.2001
(51) Int. Cl.: G06T 5/40

(54) **Multimedia query system using non-uniform bin quantization of histogram**

(30) Priority: 21.07.2000 KR 2000042039
(71) Applicant: LG ELECTRONICS INC., Seoul (KR)
(72) Inventor: Lee, Jin Soo, Sougpa-ku, Seoul (KR); Kim, Heon Jun, Sungnam-si, Kyounggi-do (KR); Song, Jung Min, Seocho-ku, Soeul (KR)
(74) Representative: Bohnenberger, Johannes, Dr.

(57) **Abstract**

The present invention relates to a multimedia query using a histogram, and more particularly, to a method for configuring a histogram which provides interoperability between histograms configured by non-uniform bin quantization using bits of a different number, and provides progressive bit processing for keeping a constant performance even when using the front parts of total bits of each bin value in the order of time series.

A histogram includes threshold values used in representing the number of n of bits for securing interoperability, capable of comparing the histograms represented by the number of bits which are differ from each other, including necessarily threshold values used in representing the number of N'(N'<N) of bits, when bin value is represented with the number of N of bits by quantization in order to query multimedia using histogram. Also, the histogram includes n-th bit represented by quantization of bin value, wherein the nth bit bisects the respective regions divided into (N-1)th bit in order to perform a progressive bit processing capable of retrieving by using only a bit, which is smaller than N, when bin value is represented with the number of N of bits by quantization in order to query multimedia using histogram.

## Description

### BACKGROUND OF THE INVENTION

### 1. Field of the Invention

The present invention relates to a multimedia query using a histogram, and more particularly, to a method for configuring a histogram which provides interoperability between histograms configured by non-uniform bin quantization using bits of a different number, and provides progressive bit processing for keeping a constant performance even when using the front parts of total bits of each bin value in the order of time series.

### 2. Description of the Related Art

Recently, as content-based multimedia query techniques are coming to the front, the study of multimedia features affecting a query performance is being made actively. Most frequently used search engines at present use global and local color information and texture information for image retrieval. Among them, the color information is known as an element mostly affecting the image retrieval. Thus, the development of more effective color features is being made, and also an attempt to develop color spaces more effective to the retrieval is being made.

A color histogram is most widely used as color information. The color histogram is information representative of color distribution of multimedia data such as images. A bin number of the histogram is determined according to how the color space is quantized. Although each bin value is represented by a decimal mostly, it also can be represented by N bits smaller than a fractional representation space for more improved performance and spatial efficiency. For example, it is generally known that spaces can be saved substantially without degradation of performance by representing 8 bits, i.e., decimals between 0 and 1, by 256 kinds of values. In a uniform quantization method, values between 0 and 1 are divided by a uniform width, quantized and represented, while, in a non-uniform quantization method, they are divided by a non-uniform width, quantized and represented.

In case of using the non-uniform quantization method, it is possible to implement an improved performance as compared to the case of using the uniform quantization method or representing a decimal as it is. For instance, a section of an important bin value is divided more finely, while a section of a value having no division ability is divided less finely, for thereby enhancing the performance. For example, in case of a histogram, most bin values consists of a number smaller than 0.2, and thus it is meaningless to divide a number more than 0.2 finely. For this reason, the bin quantization using non-uniform quantization can be employed very usefully, but it may lead to the following problems.

Problem of interoperability : Firstly, it is difficult to compare bin values each quantized by a different number. For example, a certain histogram quantizes and represents a bin value by 2⁴=16 in order to represent each bin value by 4 bits, while another histogram quantizes a bin value by 2²=4 in order to represent each bin value by 2 bits. Then, the comparison of these values is made impossible if there is no information about the method for quantization of each bin value. Therefore, it is necessary to ensure interoperability by which the comparison of bin values quantized by a different number by using a quantization method conforming to a particular protocol.

Problem of progressive bit processing : when a histogram is transferred through a network, it can be transferred in the order of bins according to the coding scheme of the histogram, or in the order of bits of the bin. In case of transferring the histogram in the order of bins, every bits of the first bin are transferred and thereafter the next bin is transferred. In case of transferring the histogram in the order of bits, the first bit of the first bin is transferred and then the first bit of the second bin is transferred. In this way, after every first bits representing each bin value are transferred, every second bits representing each bin value are transferred. In such a coding scheme, if the transfer is interrupted before the histogram is completely transferred, the comparison of the histogram has to be enabled only by the transferred part of the histogram.

### SUMMARY OF THE INVENTION

It is, therefore, an object of the present invention to provide a multimedia query using a histogram which enables comparison between histograms non-uniform bin quantized by a different number of bits, and also enables comparison between histograms by using the front parts of the histogram in the order of transfer when the histogram is transferred in the order of bits.

To achieve the above object, a histogram in accordance with the present invention is provided, which comprises threshold values used in representing the number of n of bits for securing interoperability, capable of comparing the histograms represented by bits of a different number, including necessarily threshold values used in representing the number of N'(N'<N) of bits, when bin value is represented with the number of N of bits by quantization in order to query multimedia using histogram.

In addition, there is provided a multimedia query method in accordance with the present invention, which comprises the steps of: correcting the other bin value as smaller number of N of bits and then comparing two values, if one of two histograms represents bin value with M, the other represents bin value with N(M>N), when performing the comparison between histograms represented with the number of bits which are differ from each other.

Preferably, there is provided a multimedia query method in accordance with the present invention, wherein the correcting is performed by adding the bin values divided by the threshold values (TH1s) existing between two threshold values used in representing the number of N of bits to the rest threshold values except for threshold values (TH2s) used in representing the number of N of bits, among threshold values (TH1s) used in representing the number of M of bits.

In addition, there is provided a histogram quantization method in accordance with the present invention, which comprises the steps of: dividing HMMD color space by a histogram, the histogram comprising threshold values used in representing the number of n of bits for securing interoperability, capable of comparing the histograms represented by the number of bits which are differ from each other, including necessarily threshold values used in representing the number of N'(N'<N) of bits, when bin value is represented with the number of N of bits by quantization in order to query multimedia using histogram, at this time, (a) producing indexes of two bin values by using a threshold value 2.5/310.0 for representing 1 bit bin value; (b) producing indexes of four bin value by using three threshold values 2.5/310.0, 9.1/310.0, and 30.0/310.0 for representing 2 bits bin values; (c) producing 16 indexes by deciding 0.0 of bin value as an index for representing 4 bits bin values, producing two indexes by bisecting a period of 0 and 0.6/310.0, producing an index in the period of 0.6/310.0 and 2.5/310.0, producing five indexes in the periods of 2.5/310.0 and 19.0/310.0, producing six indexes in the periods of 19.0/310.0 and 85.0/310.0, and designating the value above 85.0/310.0 as an index; and (d) producing an index by deciding 0.0 of bin value as an index for representing 6 bits bin values, producing four indexes by diving a period of 0 and 0.6/310.0 into four equal parts, producing four indexes by diving the period of 0.6/310.0 and 2.5/310.0 into four equal parts, producing ten indexes by dividing the periods of 2.5/310.0 and 19.0/310.0 into ten equal parts, producing thirty indexes by dividing the periods of 19.0/310.0 and 85.0/310.0 into thirty equal parts, producing fourteen indexes by dividing the periods of 85.0/310.0 and 121.0/310.0 into fourteen equal parts, and designating the value above 121.0/310.0 as an index.

In addition, there is provided a histogram in accordance with the present invention, which comprises n-th bit represented by quantization of bin value, wherein the nth bit bisects the respective regions divided into (N-1)th bit in order to perform a progressive bit processing capable of retrieving by using only a bit, which is smaller than N, when bin value is represented with the number of N of bits by quantization in order to query multimedia using histogram.

Preferably, there is provided a histogram encoding method in accordance with the present invention, which comprises the steps of: arranging firstly the first bit of every bin; and arranging the second bit, when encoding the histogram representing bin value capable of a progressive bit processing.

Preferably, there is provided a multimedia query system in accordance with the present invention in which only a portion of the histogram is used according to the use of query and environment of a client, thereby capable of performing the optimum query.

### BRIEF DESCRIPTION OF THE DRAWINGS

The above objects, features and advantages of the present invention will become more apparent from the following detailed description when taken in conjunction with the accompanying drawings, in which:
Fig. 1 is a view explaining an example of bin quantization which is interoperable;
Fig. 2 is a view explaining a phase in which multimedia data represented as a histogram are transferred in the order of bit priority;
Fig. 3 is a view explaining a partial query using a histogram of which transfer is interrupted;
Fig. 4 is a view explaining the relationship between a threshold and histogram data;
Fig. 5 is a view illustrating a HMMD color space to which the present invention is adapted; and
Fig. 6 is a view explaining a 184 level quantization method viewed in a MMD cross-section.

### DETAILED DESCRIPTION OF THE PREFERRED EMBODIMENT

The following detailed description of the preferred embodiments utilizes the color histogram only as an example for the purpose of illustrating the method for a multimedia query using the histogram in accordance with the present invention. The present invention is equally effective when applied to other types of histogram.

A method for configuring a histogram non-uniform bin quantized and a multimedia query using the histogram in accordance with the present invention having two objects of interoperability and progressive bit processing will now be described.

Firstly, achievement of interoperability in accordance with the present invention will be explained.

With respect to histogram information of multimedia data, a color space can be quantized differently for various uses. Likewise, a bin value can be quantized differently for various methods for representing each bin value. For example, in a particular application, 4 bits will be adequate for representing a bin value, while, in another application, at least 8 bits will be adequate for the corresponding usc. In order to calculate similarity between those applications, it is necessary to ensure the result of the comparison between them using at least the same 4 bits. However, in the non-uniform quantization, there are various quantization methods, so it is possible to compare them when the different quantization methods are employed.

Accordingly, in the present invention, a method for quantizing a bin value to enable interoperability between them is suggested.

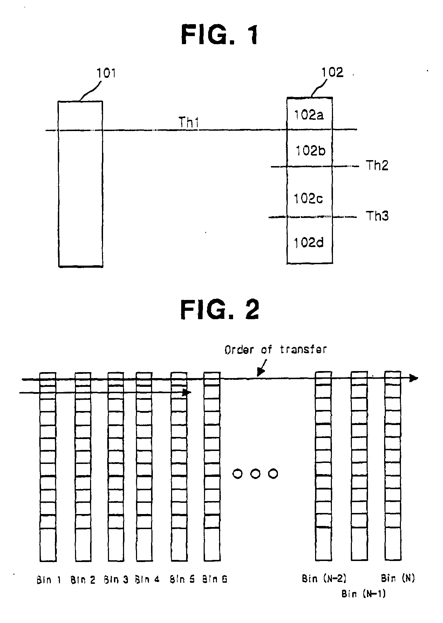

Fig. 1 is a view explaining an example of bin quantization which is interoperable. In 101 of Fig. 1, a bin value is represented as 0 or 1 based on a particular threshold TH1 for 1 bit representation. A histogram represented by such a method and 2 bit representation capable of direct comparison are described in 102 of Fig. 1. That is, a bin value is represented in four ways by using the threshold TH1 described in 101 of Fig. 1 and another two thresholds TH2 and TH3. In case of comparison with a histogram represented by 1 bit, since the threshold TH1 used in the 1 bit representation method is included as it is, the 2 bit representation can be corrected in the same way as the 1 bit representation by simply adding another parts. In this example, the total sum of section 2 102b, section 3 102c and section 4 102d of four sections 102a, 102b, 102c and 102d will be the same as the representation of 101. In this way, when a section is quantized more finely by using every thresholds used in dividing the histogram into smaller sections and another thresholds, even bin values represented by a different number of bits can be corrected and then compared by representation using bits of a smaller number.

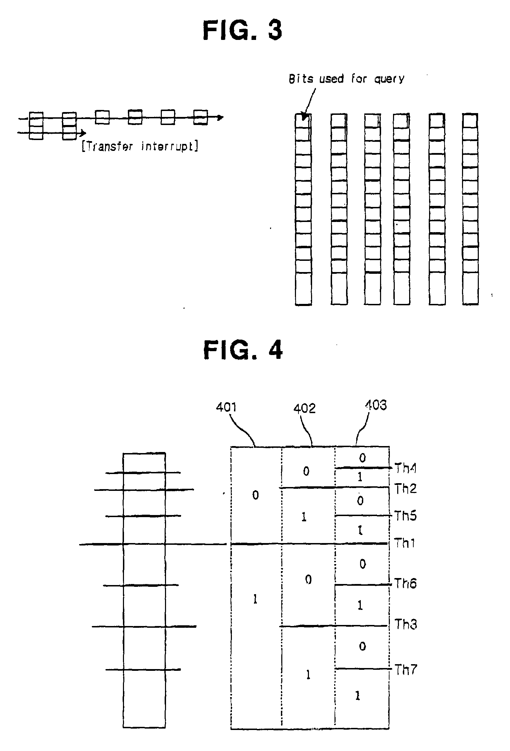

Next, the progressive bit processing in accordance with the present invention will now be described. Fig. 2 is a view explaining a phase in which multimedia data represented as a histogram are transferred in the order of bit priority. As shown in the drawing, a coding scheme can be considered in which a first bit of every bins (bin 1 ∼ bin N) is transferred and then a second bit is transferred, not in the order of bins, in transferring a histogram. In this method, in the case that transfer is interrupted before the completion of the transfer as shown in Fig. 3, query can be executed only by transferred parts. At this time, in order to assure a certain degree of performance, when each bin is quantized by n bits and represented, it is necessary to represent optimum information which can be represented by each bit in the order of bits. For this purpose, the case of quantizing a bin value will be considered as follows. Firstly, assuming that a bin value is represented by 1 bit, one optimized threshold will be used to show the highest performance when the bin value is represented by two values, i.e., 0 or 1. In addition, in case of representing the bin value by 2 bits, three optimized thresholds will be used to show the highest performance when the bin value is represented by four values. At this time, if only one bit of two bits can be used, the best performance can be expected when the optimized performance achieved at the above-described 1 bit representation is obtained. Therefore, in case of representing the bin value by 2 bits, one of the three thresholds must be a threshold used in representing the bin value by 1 bit.

In addition, the first bit indicates division of a value based on the above-described threshold of 1 bit as shown in Fig. 4. The second bit indicates division of the section of the value divided by the first bit. In this way, a n-th bit indicates division of each section divided by a (N-1)-th bit.

In other words, as shown in Fig. 4, if a bin value is represented by 1 bit in 401, it is divided based on a threshold Th1. If the bin value is represented by 2 bits in 402, each of sections divided by the threshold Th1 is divided again by the previously used threshold Th1 and another thresholds Th2 and Th3. If the bin value is represented by three bits in 403, each of sections divided by the previously used thresholds Th1, Th2 and Th3 and another thresholds Th4, Th5, Th6 and Th7. In this manner, when the bin value is quantized and represented by a small number of bits so that progressive bit proccssing can be achieved, a certain degree of query performance can be assured by using only transferred parts even though transfer is interrupted during the transfer of a histogram. Moreover, bin values of the histogram can be queried by using only parts of total bits according to the use of the query. At this time, in the present invention, even though parts of total bits are used, they represent every information of the entire color bins and thus a good performance can be expected.

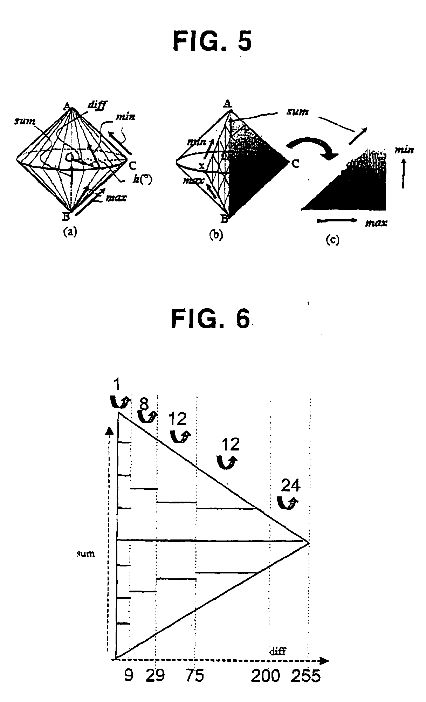

Fig. 5 describes a HMMD color space for explaining a progressive color histogram using the HMMD color space in accordance with the embodiment of the present invention. The HMMD color space is a color space of a double cone shape. The central axis thereof is represented as SUM ([MAX(RGB) + MIN(RGB)]/2), which corresponds to brightness. Fineness is increased in the order of center to peripheral sides of the cone, which is represented as DIFF(MAX(RGB)-MIN(RGB)). The angle of the cone indicates a color, which is generally represented as Hue.

Fig. 6 illustrates an example of 184 level quantization of the HMMD color space explained in Fig. 5.

As shown in Figure 6, first, a region is divided into 5 partial regions on the basis of DIFF and then subdivided on the basis of HUE and SUM again, thereby representing 184 partial regions in all. These produce a color histogram constituted by 184 bins, respectively, as follows. First, indexes of two bin values by using a threshold value 2.5/310.0 for representing 1 bit bin value are produced. Thereafter, indexes of four bin values by using three threshold values 2.5/310.0, 9.1/310.0, and 30.0/310.0 for representing 2 bits bin values arc produced. Also, 16 indexes by deciding 0.0 of bin value as an index for representing 4 bits bin values, producing two indexes by bisecting a period of 0 and 0.6/310.0, producing an index in the period of 0.6/310.0 and 2.5/310.0, producing five indexes in the periods of 2.5/310.0 and 19.0/310.0, producing six indexes in the periods of 19.0/310.0 and 85.0/310.0, and designating the value above 85.0/310.0 as an index are produced. On the other hand, an index by deciding 0.0 of bin value as an index for representing 6 bits bin values, producing four indexes by diving a period of 0 and 0.6/310.0 into four equal parts, producing four indexes by diving the period of 0.6/310.0 and 2.5/310.0 into four equal parts, producing ten indexes by dividing the periods of 2.5/310.0 and 19.0/310.0 into ten equal parts, producing thirty indexes by dividing the periods of 19.0/310.0 and 85.0/310.0 into thirty equal parts, producing fourteen indexes by dividing the periods of 85.0/310.0 and 121.0/310.0 into fourteen equal parts, and designating the value above 121.0/310.0 as an index is produced.

In the present invention, in a multimedia query using a histogram, free comparative query between every servers on the internet, not one server, is enabled by providing interoperability by which comparative query between histograms bin quantized by different number of bits, when considering spatial efficiency by representing a bin value by bits of a decimal. In addition, when the bin value is quantized and represented by a limited number of bits, a certain degree of query performance can be expected by executing query using only parts of the bits, for thereby enabling query at the time of transfer interrupt caused by a problem on a network and performing a query service conforming to the use of the query or the environment of a client.

## Claims

1. A histogram comprising;
threshold values used in representing the number of n of bits for securing interoperability, capable of comparing the histograms represented by the number of bits which are differ from each other, including threshold values used in representing the number of N'(N'<N) of bits, when bin value is represented with the number of N of bits by quantization in order to query multimedia using histogram.

2. The histogram according to claim 1, wherein the histogram is a color histogram.

3. A multimedia query method comprising the steps of:
correcting the other bin value as smaller number of N of bits and then comparing two values if one of two histograms represents bin value with M, the other represents bin value with N(M>N), when performing the comparison between histograms represented with the number of bits which are differ from each other.

4. The multimedia query method according to claim 3, wherein the correcting process is performed by summing the bin values divided by the threshold values (TH1s) existing between two threshold values used in representing the number of N of bits to the rest threshold values except for threshold values (TH2s) used in representing the number of N of bits, among threshold values (TH1s) used in representing the number of M of bits.

5. The multimedia query method according to claim 3, wherein the histogram is a color histogram.

6. A color histogram quantization method comprising the steps of:
dividing HMMD color space by a histogram, the color histogram comprising threshold values used in representing the number of n of bits for securing interoperability, capable of comparing the histograms represented by the number of bits which are differ from each other, including necessarily threshold values used in representing the number of N'(N'<N) of bits, when bin value is represented with the number of N of bits by quantization in order to query multimedia using the color histogram, at this time,
(a) producing indexes of two bin values by using a threshold value 2.5/310.0 for representing 1 bit bin value;
(b) producing indexes of four bin values by using three threshold values 2.5/310.0, 9.1/310.0, and 30.0/310.0 for representing 2 bits bin values;
(c) producing 16 indexes by deciding 0.0 of bin value as an index for representing 4 bits bin values, producing two indexes by bisecting a period of 0 and 0.6/310.0, producing an index in the period of 0.6/310.0 and 2.5/310.0, producing five indexes in the periods of 2.5/310.0 and 19.0/310.0, producing six indexes in the periods of 19.0/310.0 and 85.0/310.0, and designating the value above 85.0/310.0 as an index; and
(d) producing an index by deciding 0.0 of bin value as an index for representing 6 bits bin values, producing four indexes by diving a period of 0 and 0.6/310.0 into four equal parts, producing four indexes by diving the period of 0.6/310.0 and 2.5/310.0 into four equal parts, producing ten indexes by dividing the periods of 2.5/310.0 and 19.0/310.0 into ten equal parts, producing thirty indexes by dividing the periods of 19.0/310.0 and 85.0/310.0 into thirty equal parts, producing fourteen indexes by dividing the periods of 85.0/310.0 and 121.0/310.0 into fourteen equal parts, and designating the value above 121.0/310.0 as an index.

7. A histogram comprising;
n-th bit represented by quantization of bin value, wherein the nth bit bisects the respective regions divided into (N-1)th bit in order to perform a progressive bit processing capable of retrieving by using only bits, which is smaller than N, when bin value is represented with the number of N of bits by quantization in order to query multimedia using histogram.

8. The histogram according to claim 7, wherein the histogram is a color histogram.

9. A histogram encoding method comprising the steps of:
arranging the first bit of every bin first and then arranging the second bit, when encoding the histogram representing bin value to perform the progressive bit processing.

10. The histogram encoding method according to claim 9, wherein the histogram is a color histogram.
